# EUROPEAN PATENT SPECIFICATION

(11) **EP 3 406 316 B1**
(45) Date of publication and mention of the grant of the patent: **22.07.2020**
(21) Application number: 18173479.9
(22) Date of filing: 22.05.2018
(51) Int. Cl.: F02M 37/50, B60K 15/03, B60K 15/077, B01D 35/027

(54) **A FILTER FOR IMPROVING SUCTION CAPABILITY OF A FUEL PUMP**
FILTER ZUR VERBESSERUNG DER SAUGFÄHIGKEIT EINER BRENNSTOFFPUMPE
FILTRE PERMETTANT D'AMÉLIORER LA CAPACITÉ D'ASPIRATION D'UNE POMPE À CARBURANT

(30) Priority: 25.05.2017 IT 201700056763
(43) Date of publication of application: 28.11.2018
(73) Proprietor: Bitron S.p.A., 10122 Torino (IT)
(72) Inventor: CARREA, Davide, 17012 ALBISSOLA MARINA (Savona) (IT)
(74) Representative: Vanzini, Christian

(56) References cited:
- WO-A1-2012/038821
- CN-A- 102 748 174
- US-A- 5 647 329
- US-A1- 2006 076 287

## Description

The present invention relates in general to fuel supply systems, in particular for motorcycles.

Fuel supply systems comprising a fuel filter arranged in a fuel tank upstream of a fuel pump are well known, from example from WO 2012/038821 A1, US 2006/0076287 A1, CN 102748174 A or US 5647329 A.

However, it is known that, when the level of fuel inside the tank falls below a certain level, withdrawing the fuel by the fuel pump may be difficult. In particular, this problem is experienced in motorcycles, which, during travel, may be subject to very significant lateral inclinations.

An object of the present invention is to provide a measure to eliminate or at least reduce the incidence of such problem.

This and other objects are achieved according to the invention with a fuel filter according to claim 1.

The device according to the invention, in addition to the normal fluid filtering function, improves the pump's fluid suction capacity. The action of the device begins when the level of the fluid becomes very limited inside the containing tank, and therefore not sufficient to completely submerge the same filter, especially if the fluid is in an agitated state caused by the vehicle's operation. The device therefore allows the intake of fuel from areas where such would not be possible due to distance and the height difference. Due to the wicking of the spongy body, it is possible to provide the suction mouth of the pump with a supply of fluid such as to guarantee the correct operation of the pump, while at the same time reducing possible inclusions of air, gas or fumes. All this is possible even if the vehicle may be subject to changes in tilt due to load, braking or acceleration.

According to the invention, the filter further comprises a support structure housed within the envelope and provided to hold the wicking body, the support structure being formed in one piece with the sleeve. On the one hand, such support structure may prevent the wicking body from collapsing due to external phenomena or the depression generated by the pump, and, on the other, it may increase the wicking phenomenon which is triggered inside the spongy body if the coupling between the support structure and the wicking body is made in such a way as to have a certain compression of the spongy material of such body.

Moreover, the support structure comprises a proximal structure portion directly connected to the sleeve and a distal structure portion transversely extending from the proximal structure portion. This allows also distant areas of the bottom of the tank to be reached by the suction end of the pump.

Furthermore, the distal structure portion is located at a level lower than the proximal structure portion, with respect to a direction parallel to the axis of the sleeve. This makes it possible to use the device with more complex tank geometries, wherein the bottom of the tank has areas arranged at different heights.

From a constructive point of view, it may be advantageous to have a configuration whereby the sleeve comprises an outer sleeve part and an inner sleeve part, coaxial and fastened to each other, a perimeter of the membrane portion being tightened between the part outside the sleeve and the part inside the sleeve. The fastening between the envelope and the sleeve takes place in a simple way due to the coupling between the two parts of the sleeve.

Also an object of the invention is a fuel supply arrangement for a motor vehicle, comprising a fuel pump with a suction end and a filter according to the invention, wherein the sleeve of the fuel filter is fastened to the suction end of the fuel pump and the envelope of the fuel filter is arranged outside the suction end of the pump.

Further characteristics and advantages of the invention will become apparent from the detailed description that follows, provided by way of non-limiting example with reference to the accompanying drawings, wherein:
figure 1 is a cross-sectional view of a fuel tank wherein a filter according to the present invention is installed;
figures 2 and 3 are side elevation and plan views of the filter;
figure 4 is a cross-sectional view of the filter taken along the line A-A of figure 2; and
figure 5 is a cutaway view of the filter.

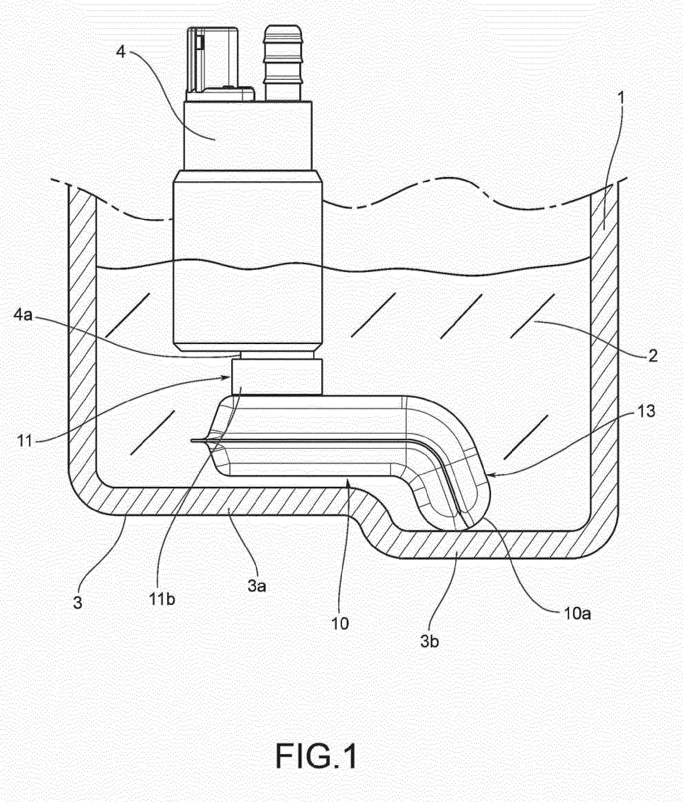

With reference to figure 1, a containing tank 1 for a motor vehicle, in particular, a motorcycle, is illustrated, inside of which a fuel fluid 2 is contained. The tank 1 comprises side walls and a bottom wall 3, which in the illustrated example comprises a first bottom portion 3a and a second bottom portion 3b arranged at different heights.

Inside the tank 1, a fuel pump 4 is conventionally arranged having a suction end 4a near the bottom 3 of the tank 1, in particular near the first bottom portion 3a. The fuel pump 4 is adapted to be connected to a supply system of the motor vehicle (not shown).

A fuel filter 10 is fastened to the suction end 4a of the pump 4. The filter 10 comprises a sleeve 11, for example, made of plastic material, whereby the filter 10 is fastened to the suction end 4a of the fuel pump 4, and an envelope 13, fastened to the sleeve 11 and arranged outside the suction end 4a of the pump 4. At least a part of the envelope 13 of the fuel filter 10 is arranged in contact with the bottom 3 of the tank 1. The method for fastening the sleeve 11 to the suction end 4a of the pump 4 is of a conventional type, for example, by screw or bayonet, and is not an object of the present invention.

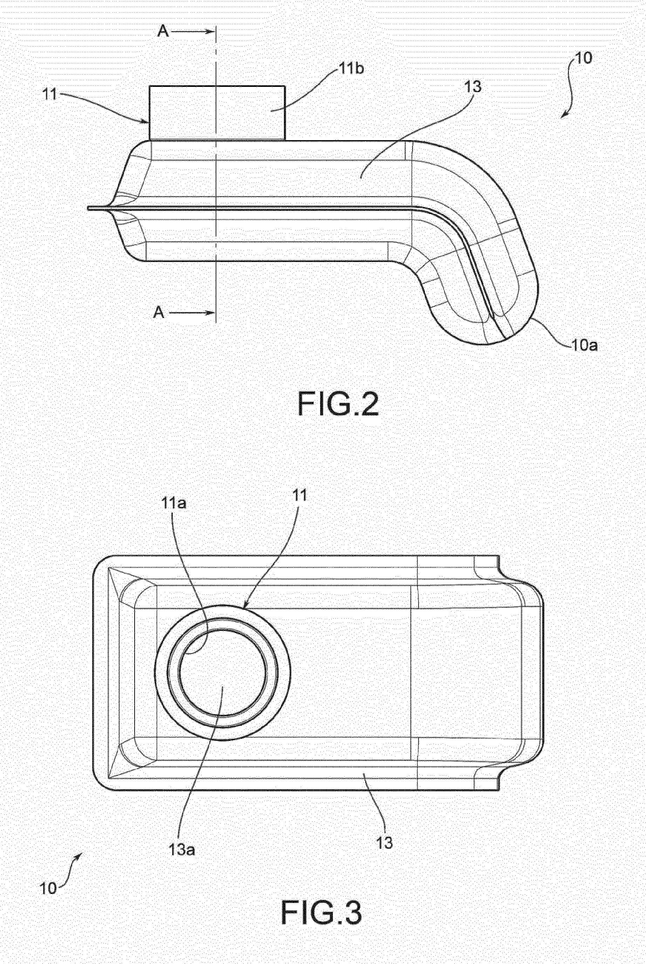

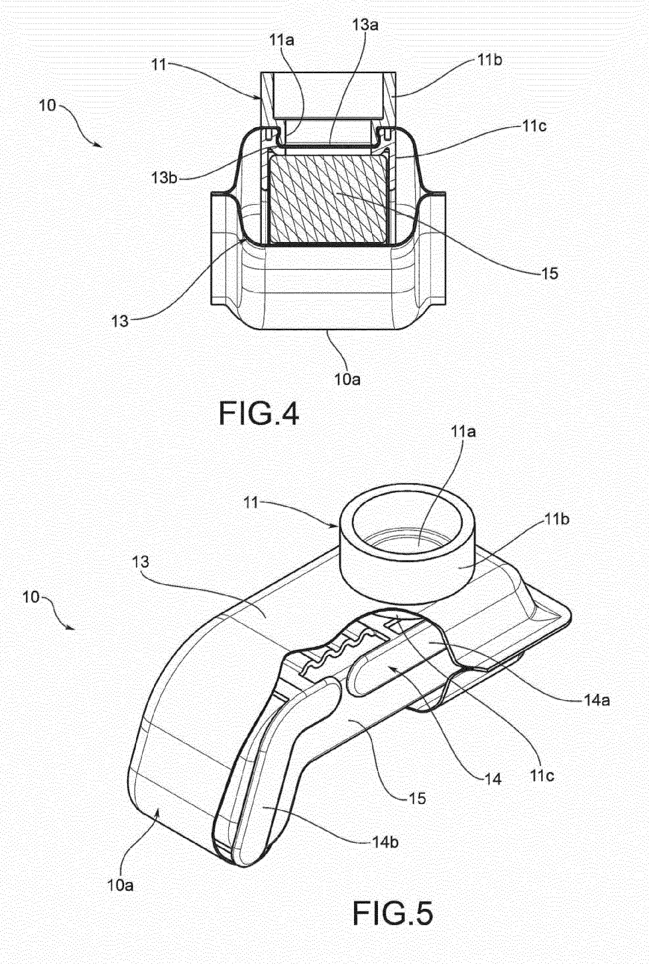

With reference to figures 2 to 5, the sleeve 11 of the filter 10 defines a fuel passage opening 11a, through which the fuel 2 coming from the tank 1 and passing through the filter 10 reaches the suction end 4a of the pump. In the illustrated example, the sleeve 11 comprises an outer sleeve part 11b and an inner sleeve part 11c coaxial and fastened to one another, for example, snap-fastened. The outer sleeve part 11b is arranged outside the envelope 13 of the filter 10, and the inner sleeve part 11c is arranged inside the filter 10.

The envelope 13 is at least partly formed by a filtering membrane having a predetermined mesh size, for example, made of plastic or metallic material. In the illustrated example, the envelope 13 is formed by two sheets of filtering membrane joined to one another, for example, welded, along their perimeter.

A portion 13a of the envelope 13, hereinafter referred to as the membrane portion, is arranged in such a way as to completely cover the cross-section of the fuel passage opening 11a. In the illustrated example, a perimeter 13b of the membrane portion 13a is clamped between the outer sleeve part 11b and the inner sleeve part 11c. Other embodiments are possible for achieving the coupling between the sleeve and the envelope. For example, the envelope could be welded to the sleeve or comprise a part made in one piece therewith, and the sleeve could be entirely arranged outside or inside the envelope.

Inside the envelope 13 there is arranged a support structure 14 made in a single piece with the sleeve 11, for example, made of plastic material. According to an alternative example not covered by the claims (not shown), the envelope may comprise a rigid part and therefore the internal support structure is omitted. According to a further example not covered by the claims, the filter could be devoid of a rigid structure.

The support structure 14 comprises a portion of the proximal structure 14a directly connected to the sleeve 11, in particular, to the inner sleeve part 11c, and a distal structure portion 14b extending transversely from the proximal structure portion 14a.

The distal structure portion 14b is also inclined away from the sleeve 11; it is therefore partially arranged at a lower level than the proximal structure portion 14a, considering the level in a direction parallel to the axis of the sleeve 11.

Inside the envelope 13 there is arranged a wicking body 15 made of spongy material, for example of an expanded plastic material, which is arranged in such a way as to completely cover the cross-section of the fuel passage opening 11a. The wicking body 15 is supported by the support structure 14, which basically acts as a skeleton for the body 15 and the envelope 13.

The envelope 13 and the body 15 therefore follow a geometrical arrangement determined by the support structure 14; in particular, there is a distal part 10a of the filter which extends transversely with respect to the axis of the sleeve 11 and is folded downwards, and therefore arranged in such a way as to come in contact with the second bottom portion 3b of the tank 1, located away from the pump 4 and at a lower level than the first bottom portion 3a of the tank.

The device described above, in addition to the normal fluid filtering function, improves the pump's fluid suction capacity. The action of the device begins when the level of the fluid becomes very limited inside the containing tank, and therefore not sufficient to completely submerge the filter itself. The device therefore allows the intake of fuel from the second area 3b where it would not be possible due to distance and height difference. Due to the wicking of the spongy body, it is in effect possible to provide the suction mouth 4a of the pump with a supply of fluid such as to guarantee the correct operation of the pump.

Naturally, without altering the principle of the invention, the embodiments and the details of construction may vary widely with respect to those described and illustrated purely by way of non-limiting example, without thereby departing from the scope of the invention as defined in the accompanying claims.

## Claims

1. A fuel filter comprising
a sleeve (11) adapted to be fastened at a suction end (4a) of a fuel pump (4) and defining a fuel passage opening (11a),
an envelope (13) fastened to the sleeve (11) and at least partially formed by a filtering membrane, and
a wicking body (15) made of spongy material, housed within the envelope (13) and arranged in such a way as to completely cover the fuel passage opening (11a),
said filter being **characterized in that** the filtering membrane comprises a membrane portion (13a) completely covering the fuel passage opening (11a),
wherein the fuel filter further comprises a support structure (14) housed within the envelope (13) and provided for holding the wicking body (15), the support structure (14) being formed in one piece with the sleeve (11),
wherein the support structure (14) comprises a proximal structure portion (14a) directly connected to the sleeve (11) and a distal structure portion (14b) transversely extending from the proximal structure portion (14a),
wherein the distal structure portion (14b) is located at a level lower than the proximal structure portion (14a), with respect to a direction parallel to the axis of the sleeve (11).

2. A filter according to claim 1, wherein the sleeve (11) comprises an outer sleeve part (11b) and an inner sleeve part (11c) coaxial and fastened to each other, a perimeter (13b) of the membrane portion (13a) being clamped between the outer sleeve part (11b) and the inner sleeve part (11c).

3. A fuel supply arrangement for a motor vehicle, comprising a fuel pump (4) having a suction end (4a) and a fuel filter (10) according to any of the preceding claims, wherein the sleeve (11) of the fuel filter (10) is fastened to the suction end (4a) of the fuel pump (4) and the envelope (13) of the fuel filter (10) is arranged outside the suction end (4a).

4. An arrangement according to claim 3, further comprising a containing tank (1), wherein the suction end (4a) of the fuel pump (4) is arranged close to a bottom (3) of the tank (1), and the envelope (13) of the fuel filter (10) is arranged in contact with the bottom (3) of the tank (1).

5. An arrangement according to claim 4, wherein the bottom (3) of the tank (1) comprises a first bottom portion (3a) at which the suction end (4a) of the fuel pump (4) is arranged, and a second bottom portion (3b) arranged at a level lower than the first bottom portion (3a), a distal end (10a) of the envelope (13) of the fuel filter (10) being in contact with the second bottom portion (3b) of the tank (1).

## Patentansprüche

1. Brennstofffilter mit
einer Hülse (11), die dazu ausgelegt ist, an einer Saugseite (4a) einer Brennstoffpumpe (4) angebracht zu werden und eine Brennstoffleitungsöffnung (11a) definiert,
einer Ummantelung (13), die an der Hülse (11) angebracht ist und zumindest teilweise von einer Filtermembran gebildet ist, und
einem Dochtkörper (15) aus schwammartigem Werkstoff, der innerhalb der Ummantelung (13) aufgenommen ist und derart ausgelegt ist, dass er die Brennstoffleitungsöffnung (11a) vollständig abdeckt,
wobei der Filter **dadurch gekennzeichnet ist, dass** die Filtermembran einen Membranteil (13a) aufweist, der die Brennstoffleitungsöffnung (11a) vollständig abdeckt,
wobei der Brennstofffilter ferner eine Tragestruktur (14) aufweist, die innerhalb der Ummantelung (13) angeordnet ist und zum Halten des Dochtkörpers (15) dient, wobei die Tragestruktur (14) einstückig mit der Hülse (11) ausgeführt ist,
wobei die Tragestruktur (14) einen proximalen Trageteil (14a), der unmittelbar mit der Hülse (11) verbunden ist, und einen distalen Trageteil (14b) aufweist, der sich quer von dem proximalen Trageteil (14a) erstreckt,
wobei der distale Trageteil (14b) bezogen auf eine Richtung parallel zu der Achse der Hülse (11) auf einem Level unterhalb des proximalen Trageteils (14a) angeordnet ist.

2. Filter nach Anspruch 1, wobei die Hülse (11) einen äußeren Hülsenteil (11b) und einen inneren Hülsenteil (11c) aufweist, die koaxial und aneinander angebracht sind, wobei ein Rand (13b) des Membranteils (13a) zwischen dem äußeren Hülsenteil (11b) und dem inneren Hülsenteil (11c) festgeklemmt ist.

3. Brennstofffilteranordnung für ein Motorfahrzeug mit einer Brennstoffpumpe (4), die eine Saugseite (4a) und einen Brennstofffilter (10) nach einem der vorangehenden Ansprüche aufweist, wobei die Hülse (11) des Brennstofffilters (10) an der Saugseite (4a) der Brennstoffpumpe (4) angebracht ist und die Ummantelung (13) des Brennstofffilters (10) außerhalb der Saugseite (4a) angeordnet ist.

4. Anordnung nach Anspruch 3, die ferner einen Vorratsbehälter (1) aufweist, wobei die Saugseite (4a) der Brennstoffpumpe (4) nahe einem Boden (3) des Behälters (1) angeordnet ist und die Ummantelung (13) des Brennstofffilters (10) in Kontakt mit dem Boden (3) des Behälters (1) angeordnet ist.

5. Anordnung nach Anspruch 4, wobei der Boden (3) des Behälters (1) einen ersten Bodenbereich (3a), an dem die Saugseite (4a) der Brennstoffpumpe (4) angeordnet ist, und einen zweiten Bodenbereich (3b) aufweist, der auf einem Level unterhalb des ersten Bodenbereichs (3a) liegt, wobei ein distales Ende (10a) der Ummantelung (13) des Brennstofffilters (10) in Kontakt mit dem zweiten Bodenbereich (3b) des Behälters (1) steht.

## Revendications

1. Filtre à carburant comprenant
un manchon (11) adapté pour être fixé à une extrémité d'aspiration (4a) d'une pompe à carburant (4) et définissant une ouverture de passage de carburant (11a),
une enveloppe (13) fixée au manchon (11) et au moins partiellement formée par une membrane de filtration, et
un corps de diffusion (15) réalisé en un matériau spongieux, logé dans l'enveloppe (13) et agencé de manière à couvrir complètement l'ouverture de passage de carburant (11a),
ledit filtre étant **caractérisé en ce que** la membrane de filtration comprend une portion de membrane (13a) couvrant complètement l'ouverture de passage de carburant (11a),
dans lequel le filtre à carburant comprend en outre une structure de support (14) logée dans l'enveloppe (13) et prévue pour le maintien du corps de diffusion (15), la structure de support (14) étant formée en une pièce avec le manchon (11),
dans lequel la structure de support (14) comprend une portion de structure proximale (14a) raccordée directement au manchon (11) et une portion de structure distale (14b) s'étendant transversalement depuis la portion de structure proximale (14a),
dans lequel la portion de structure distale (14b) est située à un niveau plus bas que la portion de structure proximale (14a), par rapport à une direction parallèle à l'axe du manchon (11).

2. Filtre selon la revendication 1, dans lequel le manchon (11) comprend une partie de manchon extérieure (11b) et une partie de manchon intérieure (11c) coaxiales et fixées l'une à l'autre, un périmètre (13b) de la portion de membrane (13a) étant serré entre la partie de manchon extérieure (11b) et la partie de manchon intérieure (11c).

3. Agencement d'alimentation en carburant pour un véhicule à moteur, comprenant une pompe à carburant (4) présentant une extrémité d'aspiration (4a) et un filtre à carburant (10) selon l'une quelconque des revendications précédentes, dans lequel le manchon (11) du filtre à carburant (10) est fixé à l'extrémité d'aspiration (4a) de la pompe à carburant (4) et l'enveloppe (13) du filtre à carburant (10) est agencée à l'extérieur de l'extrémité d'aspiration (4a).

4. Agencement selon la revendication 3, comprenant en outre un réservoir de contenance (1), dans lequel l'extrémité d'aspiration (4a) de la pompe à carburant (4) est agencée près d'un fond (3) du réservoir (1), et l'enveloppe (13) du filtre à carburant (10) est agencée en contact avec le fond (3) du réservoir (1).

5. Agencement selon la revendication 4, dans lequel le fond (3) du réservoir (1) comprend une première portion inférieure (3a), au niveau de laquelle l'extrémité d'aspiration (4a) de la pompe à carburant (4) est agencée, et une seconde portion inférieure (3b) agencée à un niveau plus bas que la première portion inférieure (3a), une extrémité distale (10a) de l'enveloppe (13) du filtre à carburant (10) étant en contact avec la seconde portion inférieure (3b) du réservoir (1).
